# EUROPÄISCHE PATENTANMELDUNG

(11) **EP 3 621 019 A1**
(43) Veröffentlichungstag der Anmeldung: **11.03.2020**
(21) Anmeldenummer: 18193152.8
(22) Anmeldetag: 07.09.2018
(51) Int. Cl.: G06Q 30/06, G06Q 50/04

(54) **COMPUTER-IMPLEMENTIERTES VERFAHREN ZUM ERSTELLEN VON ANGEBOTS- UND/ODER AUFTRAGSDATEN EINES ZU INDIVIDUALISIERENDEN OBJEKTS**

(71) Anmelder: Giffits GmbH, 22083 Hamburg (DE)
(72) Erfinder: Schmidt, Thorsten, 22397 Hamburg (DE); Schulz, Marcus, 22397 Hamburg (DE)
(74) Vertreter: Patentanwälte Olbricht Buchhold Keulertz

(57) **Zusammenfassung**

Computer-implementiertes Verfahren zum Erstellen von Angebots- und/oder Auftragsdaten (26) eines zu individualisierenden Objekts (60), wobei das Verfahren (100) die folgen-den Schritte umfasst: Bereitstellen (102) eines Kaufsystems (12) mit einer Benutzerschnittstelle (16), eines Warenwirtschaftssystems (14) und einer Datenschnittstelle (18) zwischen dem Kaufsystem (12) und dem Warenwirtschaftssystem (14) in einem Computer-system; Bereitstellen (104) von Individualisierungsdaten (52) zum Individualisieren des Objekts (60) in einer Speichereinheit des Computersystems; Empfangen (112) einer ersten Benutzereingabe umfassend Objektauswahldaten (41) des zu individualisierenden Objekts (60) über die Benutzerschnittstelle, Empfangen (120) einer weiteren Benutzereingabe umfassend mindestens eine gewählte Auswahlposition (62, 64, 66) für Individualisierungsdaten (52) an dem zu individualisierenden Objekt (60); Übermitteln (106) von Daten über die Datenschnittstelle nach mindestens einem der vorgenannten Schritte zwischen dem Kaufsystem und dem Warenwirtschaftssystem, wobei die Daten die Objektauswahldaten (41), die mindestens eine gewählte Auswahlposition (62, 64, 66), einen Datensatz (44) aus Objektdaten (46, 48, 50) des zu individualisierenden Objekts (60), wobei die Objektdaten (46, 48, 50) Objektbauteile und mindestens zwei Auswahlpositionen (62, 64, 66) für die Individualisierungsdaten (52) an einem Objekt (60) definieren, Objektkonfigurationsdaten (43), die auf der mindestens einen gewählten Auswahlposition (62, 64, 66), den Objektdaten (46, 48, 50) und den Individualisierungsdaten (52) basieren, und/oder Preisdaten (45) basierend auf den Objektkonfigurationsdaten (43) auf-weisen; Erzeugen (128) von Angebots- und/oder Auftragsdaten (26) für das zu individualisierende Objekt (60) aus den Preisdaten (45) und den Objektkonfigurationsdaten (43) mittels des Warenwirtschaftssystems (14).

## Beschreibung

Die Erfindung betrifft ein computer-implementiertes Verfahren zum Erstellen von Angebots- und/oder Auftragsdaten eines zu individualisierenden Objekts.

Zur interaktiven Konfiguration von mehrteiligen Objekten kann eine Vielzahl von Hilfsmitteln benutzt werden. So kann, wenn ein Markenzeichen eines Kunden auf ein Werbemittel, zum Beispiel ein Kugelschreiber, gedruckt werden soll, zunächst eine Verkaufsplattform eine dreidimensionale Ansicht des Artikels anbieten. Der Kunde kann dann einen Artikel auswählen und die gewünschte Position des Markenzeichens bestimmen. Eine digitale Darstellung des ausgewählten Artikels wird von den Dienstleistern mittels verschiedener Spezialprogramme an der von dem Kunden gewünschten Position mit dem Markenzeichen des Kunden versehen und dem Kunden gezeigt. Falls der Kunde eine andere Positionierung des Markenzeichens wünscht, wird dieser Prozess wiederholt. Sobald die endgültige Position festgelegt wurde, werden die Daten exportiert und in ein anderes Spezialprogramm importiert. Mit weiteren Spezialprogrammen wird eine Preisberechnung durchgeführt. Basierend auf der durchgeführten Preisberechnung mit wieder anderen Spezialprogrammen wird nach weiteren Datenexporten und Datenimporten ein Angebot für den Kunden erstellt.

Die Aufgabe ist es damit, ein verbessertes computer-implementiertes Verfahren zum Erstellen von Angebots- und/oder Auftragsdaten eines zu individualisierenden Objekts bereitzustellen.

Hauptmerkmale der Erfindung sind in den Ansprüchen 1, 12 und 13 angegeben. Ausgestaltungen sind Gegenstand der Ansprüche 2 bis 11.

Bei einem computer-implementierten Verfahren zum Erstellen von Angebots- und/oder Auftragsdaten eines zu individualisierenden Objekts, ist erfindungsgemäß vorgesehen, dass das Verfahren die folgenden Schritte umfasst: Bereitstellen eines Kaufsystems mit einer Benutzerschnittstelle, eines Warenwirtschaftssystems und einer Datenschnittstelle zwischen dem Kaufsystem und dem Warenwirtschaftssystem in einem Computersystem; Bereitstellen von Individualisierungsdaten zum Individualisieren des Objekts in einer Speichereinheit des Computersystems; Empfangen einer ersten Benutzereingabe umfassend Objektauswahldaten des zu individualisierenden Objekts über die Benutzerschnittstelle, Empfangen einer weiteren Benutzereingabe umfassend mindestens eine gewählte Auswahlposition für Individualisierungsdaten an dem zu individualisierenden Objekt; Übermitteln von Daten über die Datenschnittstelle nach mindestens einem der vorgenannten Schritte zwischen dem Kaufsystem und dem Warenwirtschaftssystem, wobei die Daten mindestens die Objektauswahldaten, die mindestens eine gewählte Auswahlposition, einen Datensatz aus Objektdaten des zu individualisierenden Objekts, wobei die Objektdaten Objektbauteile und mindestens zwei Auswahlpositionen für die Individualisierungsdaten an einem Objekt definieren, Objektkonfigurationsdaten, die auf der mindestens einen gewählten Auswahlposition, den Objektdaten und den Individualisierungsdaten basieren, und/oder Preisdaten basierend auf den Objektkonfigurationsdaten aufweisen; und Erzeugen von Angebots- und/oder Auftragsdaten für das zu individualisierende Objekt aus den Preisdaten und den Objektkonfigurationsdaten mittels des Warenwirtschaftssystems.

Unter einem zu individualisierenden Objekt wird dabei ein Objekt verstanden, auf das zum Beispiel ein individuelles Zeichen gedruckt werden soll. Die Individualisierungsdaten in der Speichereinheit dienen dabei zur Definition des individuellen Zeichens.

Mit der Erfindung wird ein computer-implementiertes Verfahren bereitgestellt, das eine Datenschnittstelle zwischen einem Kaufsystem und einem Warenwirtschaftssystem bereitstellt. Das Kaufsystem und das Warenwirtschaftssystem können Anwendungsmodule einer Anwendung sein. Die Datenschnittstelle fungiert dabei innerhalb des Verfahrens zwischen dem Kaufsystem und dem Warenwirtschaftssystem als Datenaustauschmittel. Dabei können die Daten in beide Richtungen übermittelt werden, d.h. von dem Kaufsystem zum Warenwirtschaftssystem und von dem Warenwirtschaftssystem zum Kaufsystem. Die Datenschnittstelle zwischen den Anwendungsmodulen wird automatisch genutzt, sodass keine manuelle Nutzung der Datenschnittstelle erfolgt. Die Daten können damit ohne Zutun des Benutzers direkt zwischen dem Kaufsystem und dem Warenwirtschaftssystem ausgetauscht werden. Es können auch mehrere Datenschnittstellen bereitgestellt werden.

Das Übermitteln der Daten über die Datenschnittstelle kann für jede der aufgeführten Daten einzeln ausgeführt werden. Weiter werden die genannten Daten nicht zwingend alle gleichzeitig übermittelt, sondern können nacheinander übermittelt werden, wobei zwischen jeder Übermittlung von Daten weitere Schritte des Verfahrens durchgeführt werden können. So können die Objektauswahldaten zwischen dem Empfangen der ersten Benutzereingabe und dem Empfangen der zweiten Benutzereingabe von dem Kaufsystem übermittelt werden. Vor der nächsten Datenübermittlung über die Datenschnittstelle können weitere Schritte des Verfahrens durchgeführt werden. Weiter können die Daten eine Liste von zu individualisierenden Objekten aufweisen, um eine Auswahl des zu individualisierenden Objekts zu vereinfachen. Diese Liste kann dabei vor dem Empfangen der ersten Benutzereingabe von dem Warenwirtschaftssystem an das Kaufsystem übermittelt werden.

Die Datenschnittstelle fungiert damit als direkter Kommunikationskanal zwischen dem Kaufsystem und dem Warenwirtschaftssystem. Durch diese direkte Kommunikation können Ressourcen gespart werden und der Aufwand für das Erstellen von Angebots- oder Auftragsdaten reduziert werden.

Damit wird ein computer-implementiertes Verfahren bereitgestellt, das mittels einer Datenschnittstelle die Anwendbarkeit und die Geschwindigkeit zum Erstellen von Angebots- und/oder Auftragsdaten eines zu individualisierenden Objekts verbessert. Weiter werden manuelle Datenübertragungen bzw. der Export und Import von Daten aus der bzw. in die Anwendung vermieden, so dass die Zusammenstellung von Angebots- und Auftragsdaten direkt nach den Benutzereingaben des Benutzers erfolgen kann. Dies beschleunigt das gesamte Verfahren und reduziert die Kosten.

Die Schritte des Verfahrens können unter Berücksichtigung von logischen Gesichtspunkten in beliebiger Reihenfolge ausgeführt werden.

Weiter kann das Verfahren vor dem Empfangen der ersten Benutzereingabe den nachfolgenden Schritt aufweisen: Darstellen einer digitalen Darstellung von zu individualisierenden Objekten über die Benutzerschnittstelle; und Auswählen eines der zu individualisierenden Objekte durch einen Benutzer zum Erzeugen der Objektauswahldaten.

Ein Benutzer kann dabei über die Benutzerschnittstelle zunächst Objektauswahldaten eines zu individualisierenden Objekts mit dem Kaufsystem erzeugen, d.h. der Benutzer sucht ein Objekt aus, das individualisiert werden soll. Dem Benutzer können dabei eine Vielzahl von Objekten, die für eine Individualisierung in Frage kommen, über die Benutzerschnittstelle angezeigt werden, aus denen der Benutzer dann ein zu individualisierendes Objekt auswählt.

In einem Beispiel können nach dem Empfangen einer ersten Benutzereingabe die Objektauswahldaten von dem Kaufsystem zu dem Warenwirtschaftssystem übermittelt werden, wobei das Warenwirtschaftssystem eine Datenbank aufweist, die Objektdaten für eine Vielzahl von Objekten umfasst; wobei das Verfahren den nachfolgenden Schritt aufweist; Erstellen des Datensatzes aus den Objektdaten basierend auf den Objektauswahldaten mittels des Warenwirtschaftssystems; wobei der Datensatz von dem Warenwirtschaftssystem an das Kaufsystem übermittelt wird.

Auf Basis der Objektauswahldaten kann damit ein Datensatz aus Objektdaten erstellt werden. Der Datensatz umfasst die Objektdaten des entsprechenden Objekts. Damit kommuniziert das Kaufsystem, unmittelbar nachdem der Benutzer das zu individualisierende Produkt ausgewählt hat, mit dem Warenwirtschaftssystem über die Datenschnittstelle. Dem Kaufsystem werden damit durch das Warenwirtschaftssystem direkt nach der Auswahl Objektdaten bereitgestellt, die das Kaufsystem für den weiteren Auswahl- und Individualisierungsprozess weiterverarbeiten kann.

In einem weiteren zusätzlichen oder alternativen Beispiel kann das Verfahren vor dem Empfangen der weiteren Benutzereingabe den nachfolgenden Schritt aufweisen: Erzeugen einer digitalen Darstellung aus den Objektdaten des Datensatzes und Projizieren eines Zeichens basierend auf den Individualisierungsdaten an eine beliebige Auswahlposition.

Die Objektdaten können dabei neben den möglichen Auswahlpositionen auch die Form und das Aussehen des Objekts umfassen, die für das Erstellen einer digitalen Darstellung des Objektes genutzt werden können. Damit können Auswahlpositionen für die Individualisierungsdaten an dem Objekt dargestellt werden. Die möglichen Auswahlpositionen können dem Benutzer damit direkt nach seiner Auswahl des Objekts präsentiert werden. Der Benutzer muss damit nicht erst auf die möglichen Vorschläge warten, an welcher Stelle des Objekts eine Individualisierung erfolgen kann. Mit dem Kaufsystem kann der Benutzer nun auswählen, an welcher der Auswahlpositionen die Individualisierung erfolgen soll. Der Benutzer kann dabei auch mehrere Auswahlpositionen auswählen. Das Objekt kann dabei in einer Rundumansicht dargestellt werden. Ein Benutzer kann über die Benutzerschnittstelle die Orientierung des Objekts auswählen, um Ansichten aus verschiedenen Blickwinkeln auf das Objekt zu erhalten.

Dabei kann das das Projizieren eines Zeichens den folgenden Unterschritt aufweisen: Erstellen einer Darstellung des Zeichens, das an die Auswahlposition angepasst ist.

Das Zeichen kann dabei eine aus einem Rendering-Verfahren erzeugte dreidimensionale Darstellung der Individualisierungsdaten sein. Alternativ kann das Zeichen eine zweidimensionale Darstellung der Individualisierungsdaten sein.

Weiter kann damit eine digitale Darstellung des Objekts bereitgestellt werden, die eine realistische Ansicht des Objekts aufweist. Ein Benutzer kann damit direkt einschätzen, wie die Individualisierungsdaten an der von ihm gewählten Auswahlposition wirken.

In einem Beispiel kann die digitale Darstellung mindestens zwei Darstellungsebenen aufweisen, wobei eine der mindestens zwei Darstellungsebenen eine erste Teildarstellung des Objekts aufweist und eine weitere der mindestens zwei Darstellungsebenen mindestens eine weitere Teildarstellung des Objekts aufweist.

Die Teildarstellungen können zusammen eine Gesamtdarstellung des Objekts bereitstellen. D. h., dass die Darstellungsebenen überlagert werden können, um die Gesamtdarstellung des Objekts zu erzeugen. Dadurch können einzelne Teildarstellungen des Objekts ausgetauscht oder manipuliert werden, ohne die anderen Teildarstellungen zu verändern.

Weiter kann das Verfahren nach dem Empfangen der weiteren Benutzereingabe, den nachfolgenden Schritt aufweisen: Erstellen der Objektkonfigurationsdaten aus den Objektdaten des Datensatzes, der mindestens einen gewählten Auswahlposition und den Individualisierungsdaten mittels des Kaufsystems; Bestimmen von Preisdaten basierend auf den Objektkonfigurationsdaten mittels des Kaufsystems; wobei die Preisdaten und die Objektkonfigurationsdaten von dem Kaufsystem an das Warenwirtschaftssystem übermittelt werden.

Mit den gewählten Auswahlpositionen, den Individualisierungsdaten und den Objektdaten können durch das Kaufsystem Objektkonfigurationsdaten erstellt und Preisdaten dazu bestimmt werden. Die Preisdaten und die Objektkonfigurationsdaten werden über die Datenschnittstelle an das Warenwirtschaftssystem übermittelt. Das Warenwirtschaftssystem erstellt aus dem Preisdaten und der Objektkonfiguration Angebots- und/oder Auftragsdaten. Dies vereinfacht und beschleunigt das Erstellen von Angebots- und Auftragsdaten.

Die Benutzerschnittstelle kann ein Webbrowser sein. Auf diese Weise kann ein Benutzer über das Internet eine Konfiguration eines individualisierenden Objekts durchführen. Dies vereinfacht das Verfahren.

Die Objektdaten können ein Fertigungsverfahren definieren, das mit mindestens einem Teil der Objektdaten verknüpft ist.

Auf diese Weise sind die Objektdaten direkt mit den Fertigungsverfahren verknüpft, so dass diese Informationen bei der Ermittlung der Preise und der Dauer der Herstellung berücksichtigt werden können.

Das Verfahren kann vor dem Erzeugen von Angebots- und/oder Auftragsdaten den folgenden Schritt aufweisen: Darstellen der Objektkonfigurationsdaten und der Preisdaten über die Benutzerschnittstelle.

Die Objektdaten können Objektbauteildaten, Druckpositionen, die Auswahlpositionen definieren, und Kombinationsdaten umfassen, wobei die Kombinationsdaten Regeln für die Kombination von Objektbauteildaten und Auswahlpositionen definieren

Weiter ist ein Computersystem vorgesehen, wobei das Computersystem umfasst; eine Eingabeeinheit; eine Ausgabeeinheit; eine Speichereinheit; und eine Prozessoreinheit; wobei die Eingabeeinheit dazu ausgebildet ist, Benutzereingaben zu empfangen; wobei die Speichereinheit dazu ausgebildet ist Individualisierungsdaten zum Individualisieren des Objekts bereitzustellen; wobei die Prozessoreinheit zur Durchführung des Verfahrens nach der vorangegangenen Beschreibung ausgebildet ist; und wobei die Ausgabeeinheit dazu ausgebildet ist, Angebots- und/oder Auftragsdaten auszugeben.

Weiter ist ein Computerprogrammprodukt mit auf einem Computer ausführbaren Instruktionen vorgesehen, welche auf einem Computer ausgeführt den Computer dazu veranlassen, das Verfahren nach der vorangegangenen Beschreibung durchzuführen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Darstellung der Anwendungsmodule;
- Fig. 2: eine schematische Darstellung eines zu individualisierenden Objekts;
- Fig. 3: eine schematische Darstellung eines Teils des Kaufsystems;
- Fig. 4: eine schematische Darstellung der Datenschnittstelle zwischen dem Warenwirtschaftssystem und dem Kaufsystem;
- Fig. 5: eine schematische Darstellung eines weiteren Teils des Kaufsystems;
- Fig. 6: eine weitere schematische Darstellung der Datenschnittstelle;
- Fig. 7: eine schematische Darstellung des Computersystems; und
- Fig. 8: ein Flussdiagramm des Verfahrens.

Ein Beispiel des computer-implementierten Verfahrens zum Erstellen von Angebots- und/oder Auftragsdaten eines zu individualisierenden Objekts wird im Folgenden anhand einer Anwendung 10 näher erläutert.

Die Anwendung 10 umfasst ein Kaufsystem 12, das eine Verkaufsplattform sein kann, die mit einem Webbrowser 16 verknüpft ist, ein Warenwirtschaftssystem 14, und ein Autorensystem 24. Eine Datenschnittstelle 18 verbindet das Kaufsystem 12 mit dem Warenwirtschaftssystem 14. Eine weitere Datenschnittstelle 20 verbindet das Warenwirtschaftssystem 14 mit dem Autorensystem 24. Weiter wird das Autorensystem 24 über eine dritte Datenschnittstelle 22 mit dem Kaufsystem 12 verknüpft.

Über die Datenschnittstellen 18, 20, 22 können Daten zwischen den zugehörigen Systemen ausgetauscht werden. Der Datenaustausch kann dabei ohne manuelle Hilfe erfolgen.

Die Anwendung 10 kann auf einer Prozessoreinheit 76 eines Computersystems 70 ausgeführt werden. Dabei können Individualisierungsdaten 52 zum Individualisieren des Objekts 60 in einer Speichereinheit 78 des Computersystems 70 bereitgestellt werden.

Mit dem Autorensystem 24 können Stammdaten für zu individualisierende Objekte 60 bereitgestellt werden. Stammdaten können dabei Komponenten und Regeln 31, Ebenen-Daten 30 und/oder 3-D-Daten 28 aufweisen. Ebenen-Daten 30 können dabei Bilddaten der zu individualisierenden Objekte 60 aufweisen, die übereinandergelegt eine digitale Darstellung des Objekts 60 bereitstellen. D.h., dass jede Ebene einen Teil der digitalen Darstellung eines Objekts aufweist und sich alle Ebenen, die einem der zu individualisierenden Objekte 60 zugeordnet sind, zu einer Gesamtdarstellung dieses Objekts 60 überlagern lassen.

Die 3-D-Daten 28 können Daten bereitstellen, die eine dreidimensionale Ansicht aus den Ebenen-Daten 30 der Objekte 60 erzeugen können. Dabei können die 3-D-Daten 28 einzelnen Ebenen der digitalen Darstellung der Objekte 60 zugeordnet sein.

Die Komponenten und Regeln 31 umfassen Daten über Teile der zu individualisierenden Objekte 60 und Regeln, die bestimmen wie die Teile zusammengesetzt werden und an welchen Stellen der Teile Auswahlpositionen 62, 64, 66 bereitgestellt werden können.

Die Komponenten und Regeln 31 können von dem Autorensystem 24 über die Datenschnittstelle 20 an das Warenwirtschaftssystem 14 übertragen werden. Weiter können die Ebenen-Daten 30 und die 3-D-Daten 28 über die Datenschnittstelle 22 von dem Autorensystem 24 an das Kaufsystem 12 übertragen werden.

In dem Warenwirtschaftssystem 14 können die Komponenten und Regeln 31 in einer Datenbank 33 gespeichert werden. Die Datenbank 33 kann dabei die Komponenten und Regeln 31 einzelnen zu individualisierenden Objekten 60 zuordnen.

Mittels der Datenschnittstelle 18 kann ein Teil der Komponenten und Regeln 31 der Datenbank 33 an das Kaufsystem 12 als Komponenten und Regeln 38 übermittelt werden.

Das Kaufsystem 12 umfasst ein Checkoutmodul 32, ein Visualisierungsmodul 34, und ein Steuerungsmodul 36.

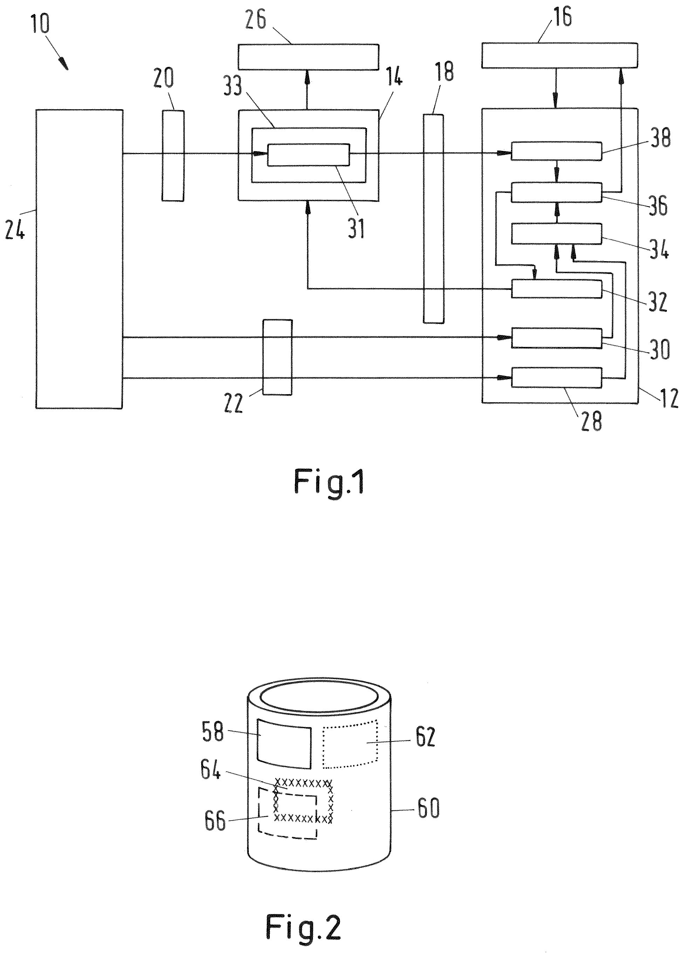

Figur 2 zeigt ein zu individualisierendes Objekt 60 am Beispiel eines Bechers. An den Becher sind mehrere Auswahlpositionen 62, 64, 66 angeordnet. In Figur 2 sind die Auswahlpositionen 62, 64, 66 lediglich als Beispiele zu sehen. Es können auch eine Vielzahl von einander überlappenden Auswahlpositionen 62, 64, 66 an dem Objekt 60 vorhanden sein. Gemäß Figur 2 ist ein Zeichen 58, das aus den Individualisierungsdaten 52 erzeugt wurde, an einer der Auswahlpositionen angeordnet. Es können auch mehrere Zeichen 58, die auf den Individualisierungsdaten 52 erzeugt wurden, an verschiedenen Auswahlpositionen 62, 64, 66 angeordnet sein.

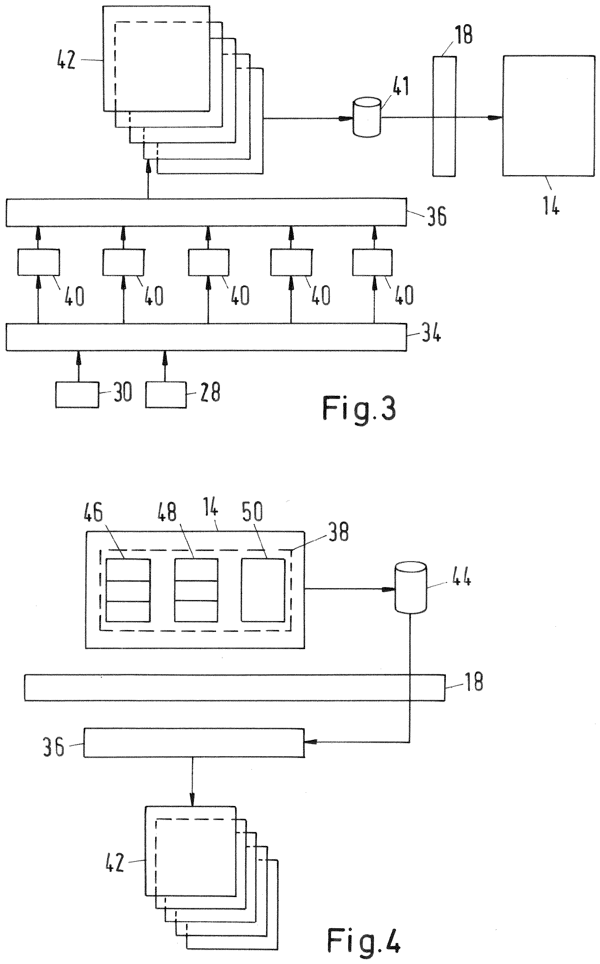

Die Ebenen-Daten 30 und die 3-D-Daten 28 können gemäß Figur 3 durch das Visualisierungsmodul 34 zu einer digitalen Darstellung eines zu individualisierenden Objektes 60 zusammengesetzt werden. Die digitale Darstellung kann dabei Daten 40 über Bilder, Farben und dreidimensionale Logos aufweisen.

Das Visualisierungsmodul 34 übermittelt die Daten 40 an das Steuerungsmodul 36. Das Steuerungsmodul 36 erstellt mit den Daten 40 mindestens zwei Darstellungsebenen 42, die in ihrer Überlagerung eine digitale Darstellung des zu individualisierenden Objektes 60 darstellen. Mit den Informationen über die digitale Darstellung weist das Steuerungsmodul 36 den Browser 16 an, das zu individualisierende Objekt 60 darzustellen. Ein Benutzer kann dabei über den Webbrowser 16 zum einen aus einer Reihe von zu individualisierenden Objekten 60 ein zu individualisierendes Objekt 60 in Rahmen einer ersten Benutzereingabe auswählen und zum anderen die digitale Darstellung des zu individualisierenden Objektes 60 betrachten und manipulieren.

Mit der Auswahl des zu individualisierenden Objekts 60 werden Objektauswahldaten 41 erstellt. Die Objektauswahldaten 41 können dabei durch das Steuerungsmodul 36 erzeugt werden. Weiter werden die Objektauswahldaten 41 über die Datenschnittstelle 18 an das Warenwirtschaftssystem 14 übermittelt.

Gemäß Figur 4 umfasst das Warenwirtschaftssystem 14 die Datenbank 33, in der die Objektdaten 46, 48, 50 abgelegt sein können. Die Objektdaten 46, 48, 50 können dabei Objektbauteildaten 46, Druckpositionen 48 für die Definition von Auswahlpositionen 62, 64, 66 und Kombinationsdaten 50 aufweisen, wobei die Kombinationsdaten 50 Regeln für die Kombination von Objektbauteildaten 46 und Auswahlpositionen 62, 64, 66 definieren.

Weiter können mit den Objektdaten 46, 48, 50 Fertigungsverfahren für zumindest ein Teil der Objektdaten verknüpft sein. Dazu können zum Beispiel einige Objektbauteile mit bestimmten Herstellungsverfahren verknüpft sein und/oder einige Druckpositionen 48 mit bestimmten Druckverfahren.

Die verknüpften Herstellungsverfahren können auch als Produktionsverfahren angesehen werden. Sie können dabei am Beispiel der meisten Kunststoffe Spritzgussverfahren, am Beispiel von Holz oder Metallen spanende Formgebungsverfahren, wie z. B. Fräsen oder Drehen, oder am Beispiel von dünnen Metallteilen, wie z. B. Aluminiumbügel von USB-Sticks oder Brillenbügeln, Laserschnitt- oder -stanzverfahren, am Beispiel von Metallteilen, wie Clips oder Lanyards, Biege- oder Kantverfahren oder am Beispiel von Geweben, wie z. B. Lanyards oder Regenschirmen, Webverfahren umfassen. Bei Logo-Fruchtgummis können z. B. Mogulverfahren eingesetzt werden. Weiter können bei Lebensmitteln, wie z. B. Logo-Obst oder Glückskekse, oder Pflanzen wie Logo-Rasen lebensmittelverändernde Verfahren oder spezielle Zubereitungsverfahren genutzt werden. Oberflächen können weiter mittels Eloxierung oder im Fall von optischen Bauteilen mit optischen Schliffen verändert werden. Weiter können Silikonbauteile z. B. gegossen, extrudiert oder chemisch gehärtet werden.

Die Druckverfahren können dabei maskenbasierte Druckverfahren wie z. B. Siebdruckverfahren, Tampondruckverfahren oder Ätzungsverfahren sein. Weiter können unter Druckverfahren auch plastische Verfahren wie z. B. Gravuren, Prägungen oder Beschichtungsverfahren wie Doming verstanden werden. Auch Verfahren, die die Oberfläche von des zu individualisierenden Objekts 60 verändern, wie z. B. Lasergravuren, können als Druckverfahren eingesetzt werden. Weiter sind Fotodruckverfahren wie z. B. Direktdruck, Fototransferdruck oder Laser-Rastergravuren oder auch Digitaldruck möglich. Als Druckverfahren können ferner formgebende Verfahren wie Stanzverfahren oder Laserstanzverfahren eingesetzt werden.

Wenn das zu individualisierende Objekt 60 aus mehreren Bauteilen zusammengesetzt ist, können die Objektdaten 46, 48, 50 auch Informationen über den Zusammenbau der Bauteile aufweisen. Die kann z. B. bei Kugelschreibern, Lanyards, Regenschirmen, Sonnenbrillen, USB-Sticks oder Geschenkekörben der Fall sein.

Mit den Objektauswahldaten 41 kann das Warenwirtschaftssystem 14 einen Datensatz 44 aus den Objektdaten 46, 48, 50 erstellen. Dieser Datensatz 44 umfasst dabei die Objektdaten 46, 48, 50, die dem ausgewählten zu individualisierenden Objekt 60 zugeordnet sind.

Das Warenwirtschaftssystem 14 übergibt den Datensatz 44 über die Datenschnittstelle 18 an das Kaufsystem 12.

Das Kaufsystem 12 erstellt über das Visualisierungsmodul 34 mit den Objektdaten 46, 48, 50 eine digitale Darstellung des Objekts 60, wobei die Auswahlpositionen 62, 64, 66 an dem Objekt 60 markiert sind. Dabei ist die digitale Darstellung eine fotorealistische Darstellung des Objekts 60. Die digitale Darstellung des Objekts 60 kann dabei in dem Webbrowser 16 angezeigt werden.

An einer beliebigen der Auswahlpositionen 62, 64, 66 wird ein Zeichen 58 projiziert, das auf den Individualisierungsdaten 52 basiert. Das Zeichen 58 kann dabei eine dreidimensionale Darstellung der Individualisierungsdaten 52 sein, wobei das Zeichen 58 zum Beispiel aus einem Rendering-Verfahren der Individualisierungsdaten 52 hervorgegangen sein kann. Dabei kann das Zeichen 58 so angepasst sein, dass es auf die entsprechende Auswahlpositionen 62, 64, 66 passt.

Der Benutzer kann eine andere Auswahlpositionen 62, 64, 66 auswählen, an der das Zeichen 58 angezeigt wird. Dabei wird für jede Auswahlposition 62, 64, 66 das Zeichen 58 entsprechend angepasst.

Weiter kann der Benutzer im Rahmen einer weiteren Benutzereingabe eine oder mehrere Auswahlpositionen 62, 64, 66 als gewählte Auswahlpositionen 62, 64, 66 festlegen, an der die Individualisierungsdaten 52 in Form eines Zeichens 58 bei dem zu individualisierenden Objekt 60 positioniert sein sollen.

Aus dieser Festlegung werden Objektkonfigurationsdaten 43 erstellt, die die gewählten Auswahlpositionen 62, 64, 66, die Individualisierungsdaten 52 und die Objektdaten 46, 48, 50 umfassen.

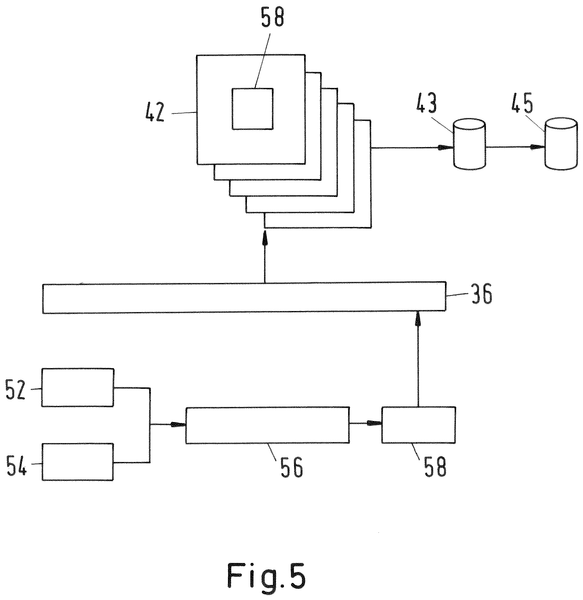

Die Individualisierungsdaten 52 können in den Objektkonfigurationsdaten 43 auch direkt als Zeichen 58 abgelegt sein. Alternativ können gemäß Figur 5 die Individualisierungsdaten 52 genauer an die gewählten Auswahlpositionen 62, 64, 66 angepasst werden. Dies kann durch ein 3D-Rendersystem 56 erfolgen, dass die Individualisierungsdaten 52 an dreidimensionale Druckflächen 54 des Objekts anpasst.

Aus den Objektkonfigurationsdaten 43 können weiter Preisdaten 45 bestimmt werden, wobei die Objektbauteildaten 46, die Auswahlpositionen 62, 64, 66 und die anzuordnenden Individualisierungsdaten 52, die in den Objektkonfigurationsdaten 43 abgelegt sind, berücksichtigt werden. Die Preisdaten 45 können dabei zum Beispiel Materialkosten, Herstellungskosten, Vertriebskosten und/oder Transportkosten aufweisen.

Transportkosten können dabei durch die Lieferwege und die Lagerung entstehen, wobei hier auch weitere Aspekte beachtet werden müssen. So umfasst eine Lieferung aus Europa ab Lager, kurze Lieferzeiten und eine geringe Varianz für die zu individualisierenden Objekte auf. Dabei fallen jedoch hohe Herstellungskosten an.

Die Herstellungskosten sind in Asien geringer als in Europa. Weiter weist eine Lieferung aus Asien eine vollständige Varianz für die zu individualisierenden Objekte 60 auf.

Weiter wird bei den Transportkosten die Art und Dauer des Transports berücksichtigt. So weist Schiffsfracht z. B. eine verlängerte Lieferzeit bei geringen Transportkosten auf. Luftfracht hingegen weist eine kurze Lieferzeit, jedoch hohe Transportkosten auf.

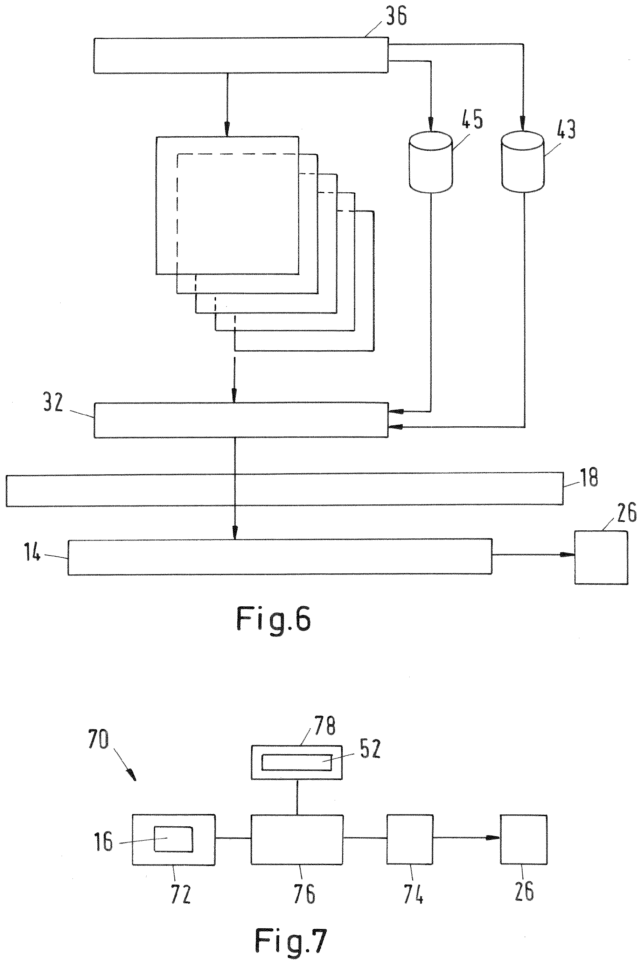

Die Preisdaten 45 und die Objektkonfigurationsdaten 43 können mit einer Ausgabeeinheit 74 dem Benutzer dargestellt werden. Nachdem der Benutzer den von den Preisdaten 45 angezeigten Preis bestätigt hat, können die Preisdaten 45 und die Objektkonfigurationsdaten 43 gemäß Figur 6 von dem Checkoutmodul 32 des Kaufsystems 12 mittels der Datenschnittstelle 18 an das Warenwirtschaftssystem 14 übermittelt werden. Das Warenwirtschaftssystem 14 kann daraus Angebots- und/oder Auftragsdaten 26 für das Objekt 60 erstellen.

Eine Datenübermittlung zwischen dem Kaufsystem 12 und dem Warenwirtschaftssystem 14 kann daher zwischen beliebigen Schritten der Anwendung ausgeführt werden.

Figur 7 zeigt ein Computersystem 70, das eine Eingabeeinheit 72, eine Ausgabeeinheit 74, eine Prozessoreinheit 76 und eine Speichereinheit 78 aufweist. Die Eingabeeinheit 72 dient dazu, Benutzereingaben zu empfangen. Dabei kann der Benutzer zum Beispiel mittels der Eingabeeinheit 72 im Rahmen der ersten Benutzereingabe eine Auswahl über ein zu individualisierendes Objekt treffen, das ihm in einem Webbrowser 16 angezeigt wird.

Die Prozessoreinheit 76 kann das oben beschriebene Verfahren durchführen. Die Prozessoreinheit führt dabei die Anwendung 10 aus, mit der das Kaufsystem 12, die Datenschnittstelle 18 und das Warenwirtschaftssystem 14 ausgeführt werden.

Die Angebots- und/oder Auftragsdaten 26 können mit der Ausgabeeinheit 74 ausgegeben werden. Dabei können die Angebots- und/oder Auftragsdaten 26 direkt in Formulare ausgefüllt und ggf. ausgedruckt werden.

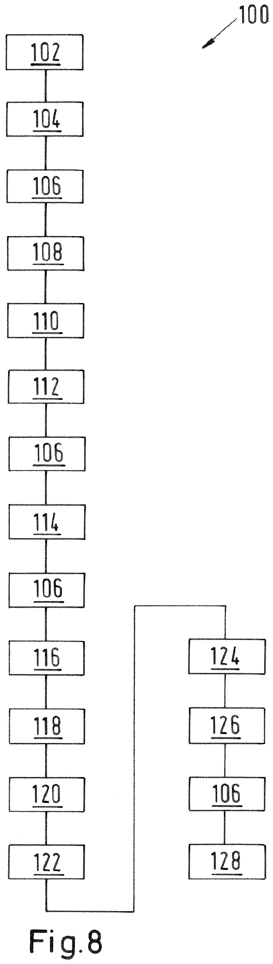

Figur 8 zeigt die Verfahrensschritte des Verfahrens 100 zum Erstellen von Angebots- und/oder Auftragsdaten 26 eines zu individualisierenden Objekts 60.

In einem ersten Schritt 102 werden ein Kaufsystem 12 mit einer Benutzerschnittstelle 16, ein Warenwirtschaftssystem 14 und einer Datenschnittstelle 18 zwischen dem Kaufsystem 12 und dem Warenwirtschaftssystem 14 in einem Computersystem 70 bereitgestellt. Das Kaufsystem 12 und das Warenwirtschaftssystem 14 können dabei als Anwendungen von dem Computersystem 70 ausgeführt werden. Weiter kann die Benutzerschnittstelle 16 ein Webbrowser sein.

Mit einem weiteren Schritt 104 können Individualisierungsdaten 52 zum Individualisieren des Objekts 60 in einer Speichereinheit 78 bereitgestellt werden. Damit kann ein Benutzer Individualisierungsdaten bereitstellen, die als Basis für ein individuelles Zeichen auf einem zu individualisierbaren Objekt 60 dargestellt werden sollen.

Weiter weist das Verfahren den Schritt 106 auf, mit dem Daten über die Datenschnittstelle 18 dem Kaufsystem 12 und dem Warenwirtschaftssystem 14 übermittelt werden, wobei der Schritt 106 an beliebiger logisch passender Stelle wiederholt werden kann. Die Daten können dabei z. B. die Objektauswahldaten 41, die mindestens eine gewählte Auswahlposition 62, 64, 66, einen Datensatz 44 aus Objektdaten 46, 48, 50 des zu individualisierenden Objekts 60, wobei die Objektdaten 46, 48, 50 Objektbauteile und mindestens zwei Auswahlpositionen 62, 64, 66 für die Individualisierungsdaten 52 an einem Objekt 60 definieren, Objektkonfigurationsdaten 43, die auf der mindestens einen gewählten Auswahlposition 62, 64, 66, den Objektdaten 46, 48, 50 und den Individualisierungsdaten 52 basieren, und/oder Preisdaten 45 basierend auf den Objektkonfigurationsdaten 43 aufweisen. Nach Schritt 102 können z. B. Daten, die eine Liste von zu individualisierenden Objekten 60 aufweist von dem Warenwirtschaftssystem 14 zum Kaufsystem 12 übermittelt werden. Weiter können die Objektdaten 46, 48, 50 ein Fertigungsverfahren definieren, das mit mindestens einem Teil der Objektdaten verknüpft ist. Die Objektdaten können weiter Objektbauteildaten 46, Druckpositionen 48, die Auswahlpositionen 62, 64, 66 definieren, und Kombinationsdaten 50 umfassen, wobei die Kombinationsdaten 50 Regeln für die Kombination von Objektbauteildaten 46 und Auswahlpositionen 62, 64, 66 definieren.

In einem Schritt 108 kann eine digitale Darstellung von zu individualisierenden Objekten 60 über die Benutzerschnittstelle dargestellt werden. Diese Darstellung kann durch einen Benutzer manipuliert werden. Die digitale Darstellung kann mindestens zwei Darstellungsebenen 42 aufweisen, wobei eine der mindestens zwei Darstellungsebenen 42 eine erste Teildarstellung des Objekts 60 aufweist und eine weitere der mindestens zwei Darstellungsebenen 42 mindestens eine weitere Teildarstellung des Objekts 60 aufweist.

Weiter kann der Benutzer im Schritt 110 eines der zu individualisierenden Objekte 60 auswählen. Durch die Auswahl in der Benutzerschnittstelle werden Objektauswahldaten 41 des zu individualisierenden Objekts 60 erzeugt.

Die Objektauswahldaten 41 können mit dem Schritt 112 im Rahmen einer ersten Benutzereingabe über die Benutzerschnittstelle empfangen werden. Danach können die Objektauswahldaten 41 mit dem Schritt 106 von dem Kaufsystem 12 zum Warenwirtschaftssystem 14 übermittelt werden. Das Warenwirtschaftssystem 14 kann dabei eine Datenbank 33 aufweisen, die Objektdaten 46, 48, 50 für eine Vielzahl von Objekten umfasst;

Basierend auf den Objektauswahldaten 41 können im Schritt 114 ein Datensatz 44 aus den Objektdaten 46, 48, 50 mittels des Warenwirtschaftssystems 14 erzeugt werden. Der Datensatz 44 kann mit einer Wiederholung des Schritts 106 von dem Warenwirtschaftssystem an das Kaufsystem 12 übermittelt werden.

Im Schritt 116 wird eine digitale Darstellung aus den Objektdaten 46, 48, 50 des Datensatzes 44 durchgeführt. Weiter wird ein Zeichens 58, das auf Individualisierungsdaten 52 basiert an eine beliebige Auswahlposition 62, 64, 66 projiziert. Dabei kann im Schritt 118 eine Darstellung des Zeichens 58 an die Auswahlposition 62, 64, 66 angepasst werden. Ein Benutzer kann damit das zu individualisierende Objekt 60 mit dem Zeichen 58 an einer der Auswahlpositionen 62, 64, 66 auswerten und manipulieren, um das Zeichen 58 an eine andere Auswahlposition 62, 64, 66 zu positionieren. Weiter kann der Benutzer eine oder mehrere Auswahlpositionen 62, 64, 66 auswählen, an denen ein Zeichen 58 im individualisierten Objekt 60 angeordnet sein soll.

Im Rahmen einer weiteren Benutzereingabe im Schritt 120 wird mindestens eine gewählte Auswahlposition 62, 64, 66 für Individualisierungsdaten 52 an dem zu individualisierenden Objekt 60 mit der Benutzerschnittstelle 16 empfangen.

In Kombination mit den Objektdaten 46, 48, 50 des Datensatzes 44 und den Individualisierungsdaten 52 werden mittels des Kaufsystems 12 aus der mindestens einen gewählten Auswahlposition 62, 64, 66 im Schritt 122 Objektkonfigurationsdaten 43 erstellt. Weiter können mittels des Kaufsystems 12 im Schritt 124 Preisdaten 45 basierend auf den Objektkonfigurationsdaten 43 bestimmt werden. Die Objektkonfigurationsdaten 43 und die Preisdaten 45 können im Schritt 126 über die Benutzerschnittstelle 16 dargestellt werden. Dies ermöglicht einem Benutzer die Prüfung der Konfiguration des Objekts und der Preise. Die Preisdaten 45 und die Objektkonfigurationsdaten 43 können in einer weiteren Wiederholung des Schritts 106 von dem Kaufsystem 12 an das Warenwirtschaftssystem 14 übermittelt werden.

Schließlich werden im Schritt 128 Angebots- und/oder Auftragsdaten 26 für das zu individualisierende Objekt 60 aus den Preisdaten 45 und den Objektkonfigurationsdaten 43 mittels des Warenwirtschaftssystems 14 erzeugt.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 10: Anwendung
- 12: Kaufsystem
- 14: Warenwirtschaftssystem
- 16: Webbrowser
- 18: Datenschnittstelle
- 20: Datenschnittstelle
- 22: Datenschnittstelle
- 24: Autorensystem
- 26: Angebots- und/oder Auftragsdaten
- 28: 3-D-Daten
- 30: Ebenen-Daten
- 31: Komponenten und Regeln
- 32: Checkoutmodul
- 33: Datenbank
- 34: Visualisierungsmodul
- 36: Steuerungsmodul
- 38: Komponenten und Regeln
- 40: Daten
- 41: Objektauswahldaten
- 42: Darstellungsebenen
- 43: Objektkonfigurationsdaten
- 44: Datensatz
- 46: Objektbauteildaten
- 48: Druckpositionen
- 50: Kombinationsdaten
- 52: Individualisierungsdaten
- 54: 3D-Druckfläche
- 56: 3D-Rendersystem
- 58: Zeichen
- 60: Objekt
- 62: Auswahlpositionen
- 64: Auswahlpositionen
- 66: Auswahlpositionen
- 70: Computersystem
- 72: Eingabeeinheit
- 74: Ausgabeeinheit
- 76: Prozessoreinheit
- 78: Speichereinheit

## Patentansprüche

1. Computer-implementiertes Verfahren zum Erstellen von Angebots- und/oder Auftragsdaten (26) eines zu individualisierenden Objekts (60), wobei das Verfahren (100) die folgenden Schritte umfasst:
- Bereitstellen (102) eines Kaufsystems (12) mit einer Benutzerschnittstelle (16), eines Warenwirtschaftssystems (14) und einer Datenschnittstelle (18) zwischen dem Kaufsystem (12) und dem Warenwirtschaftssystem (14) in einem Computersystem;
- Bereitstellen (104) von Individualisierungsdaten (52) zum Individualisieren des Objekts (60) in einer Speichereinheit des Computersystems;
- Empfangen (112) einer ersten Benutzereingabe umfassend Objektauswahldaten (41) des zu individualisierenden Objekts (60) über die Benutzerschnittstelle,
- Empfangen (120) einer weiteren Benutzereingabe umfassend mindestens eine gewählte Auswahlposition (62, 64, 66) für Individualisierungsdaten (52) an dem zu individualisierenden Objekt (60);
- Übermitteln (106) von Daten über die Datenschnittstelle nach mindestens einem der vorgenannten Schritte zwischen dem Kaufsystem (12) und dem Warenwirtschaftssystem (14), wobei die Daten mindestens die Objektauswahldaten (41), die mindestens eine gewählte Auswahlposition (62, 64, 66), einen Datensatz (44) aus Objektdaten (46, 48, 50) des zu individualisierenden Objekts (60), wobei die Objektdaten (46, 48, 50) Objektbauteile und mindestens zwei Auswahlpositionen (62, 64, 66) für die Individualisierungsdaten (52) an einem Objekt (60) definieren, Objektkonfigurationsdaten (43), die auf der mindestens einen gewählten Auswahlposition (62, 64, 66), den Objektdaten (46, 48, 50) und den Individualisierungsdaten (52) basieren, und/oder Preisdaten (45) basierend auf den Objektkonfigurationsdaten (43) aufweisen;
- Erzeugen (128) von Angebots- und/oder Auftragsdaten (26) für das zu individualisierende Objekt (60) aus den Preisdaten (45) und den Objektkonfigurationsdaten (43) mittels des Warenwirtschaftssystems (14).

2. Computer-implementiertes Verfahren nach Anspruch 1, **dadurch gekennzeichnet, dass** das Verfahren vor dem Empfangen der ersten Benutzereingabe den nachfolgenden Schritt aufweist:
- Darstellen (108) einer digitalen Darstellung von zu individualisierenden Objekten (60) über die Benutzerschnittstelle; und
- Auswählen (110) eines der zu individualisierenden Objekte (60) durch einen Benutzer zum Erzeugen der Objektauswahldaten (41).

3. Computer-implementiertes Verfahren nach Anspruch 1 oder 2, **dadurch gekennzeichnet, dass** nach dem Empfangen (112) einer ersten Benutzereingabe die Objektauswahldaten (41) von dem Kaufsystem (14) zu dem Warenwirtschaftssystem übermittelt werden, wobei das Warenwirtschaftssystem (14) eine Datenbank (33) aufweist, die Objektdaten (46, 48, 50) für eine Vielzahl von Objekten umfasst; wobei das Verfahren den nachfolgenden Schritt aufweist;
- Erstellen (114) des Datensatzes (44) aus den Objektdaten (46, 48, 50) basierend auf den Objektauswahldaten (41) mittels des Warenwirtschaftssystems (14);
wobei der Datensatz (44) von dem Warenwirtschaftssystem an das Kaufsystem (12) übermittelt wird.

4. Computer-implementiertes Verfahren nach Anspruch 1 oder 2, **dadurch gekennzeichnet, dass** das Verfahren vor dem Empfangen (120) der weiteren Benutzereingabe den nachfolgenden Schritt aufweist
- Erzeugen (116) einer digitalen Darstellung aus den Objektdaten (46, 48, 50) des Datensatzes (44) und Projizieren eines Zeichens (58) basierend auf den Individualisierungsdaten (52) an eine beliebige Auswahlposition (62, 64, 66).

5. Computer-implementiertes Verfahren nach Anspruch 3, **dadurch gekennzeichnet, dass** das Projizieren eines Zeichens (58) den folgenden Unterschritt aufweist:
- Erstellen (118) einer Darstellung des Zeichens (58), das an die Auswahlposition (62, 64, 66) angepasst ist.

6. Computer-implementiertes Verfahren nach Anspruch 2 oder 4, **dadurch gekennzeichnet, dass** die digitale Darstellung mindestens zwei Darstellungsebenen (42) aufweist, wobei eine der mindestens zwei Darstellungsebenen (42) eine erste Teildarstellung des Objekts (60) aufweist und eine weitere der mindestens zwei Darstellungsebenen (42) mindestens eine weitere Teildarstellung des Objekts (60) aufweist.

7. Computer-implementiertes Verfahren nach einem der Ansprüche 1 bis 6, **dadurch gekennzeichnet, dass** das Verfahren nach dem Empfangen (120) der weiteren Benutzereingabe, den nachfolgenden Schritt aufweist:
- Erstellen (122) der Objektkonfigurationsdaten (43) aus den Objektdaten (46, 48, 50) des Datensatzes (44), der mindestens einen gewählten Auswahlposition (62, 64, 66) und den Individualisierungsdaten (52) mittels des Kaufsystems (12);
- Bestimmen (124) von Preisdaten (45) basierend auf den Objektkonfigurationsdaten (43) mittels des Kaufsystems (12);
wobei die Preisdaten (45) und die Objektkonfigurationsdaten (43) von dem Kaufsystem (12) an das Warenwirtschaftssystem (14) übermittelt werden.

8. Computer-implementiertes Verfahren nach einem der Ansprüche 1 bis 7, **dadurch gekennzeichnet, dass** die Benutzerschnittstelle (16) ein Webbrowser ist.

9. Computer-implementiertes Verfahren nach einem der vorhergehenden Ansprüche, wobei die Objektdaten (46, 48, 50) ein Fertigungsverfahren definieren, das mit mindestens einem Teil der Objektdaten verknüpft ist.

10. Computer-implementiertes Verfahren nach einem der vorhergehenden Ansprüche
**dadurch gekennzeichnet, dass** das Verfahren nach vor dem Bestimmen (124) von Preisdaten (45) basierend auf den Objektkonfigurationsdaten (43) mittels des Kaufsystems (12) den folgenden Schritt aufweist:
- Darstellen (126) der Objektkonfigurationsdaten (43) und der Preisdaten (45) über die Benutzerschnittstelle (16).

11. Computer-implementiertes Verfahren nach einem der vorhergehenden Ansprüche
**dadurch gekennzeichnet, dass** die Objektdaten Objektbauteildaten (46), Druckpositionen (48), die Auswahlpositionen (62, 64, 66) definieren, und Kombinationsdaten (50) umfassen, wobei die Kombinationsdaten (50) Regeln für die Kombination von Objektbauteildaten (46) und Auswahlpositionen (62, 64, 66) definieren.

12. Computersystem (70) umfassend;
- eine Eingabeeinheit (72);
- eine Ausgabeeinheit (74);
- eine Speichereinheit (78); und
- eine Prozessoreinheit (76);
wobei die Eingabeeinheit (72) dazu ausgebildet ist, Benutzereingaben zu empfangen;
wobei die Speichereinheit (78) dazu ausgebildet ist Individualisierungsdaten zum Individualisieren des Objekts bereitzustellen;
wobei die Prozessoreinheit (76) zur Durchführung des Verfahrens nach einem der vorhergehenden Ansprüche ausgebildet ist; und
wobei die Ausgabeeinheit (74) dazu ausgebildet ist, Angebots- und/oder Auftragsdaten auszugeben.

13. Computerprogrammprodukt mit auf einem Computer ausführbaren Instruktionen, welche auf einem Computer ausgeführt den Computer dazu veranlassen, das Verfahren nach einem der Ansprüche 1 bis 11 durchzuführen.
